# EUROPEAN PATENT APPLICATION

(11) **EP 1 798 900 A1**
(43) Date of publication of application: **20.06.2007**
(21) Application number: 05292751.4
(22) Date of filing: 15.12.2005
(51) Int. Cl.: H04L 12/28, H04L 29/12

(54) **Access multiplexer**

(71) Applicant: Alcatel Lucent, 75008 Paris (FR)
(72) Inventor: Cetin, Riza, 2018 Antwerp (BE)
(74) Representative: Narmon, Gisèle Marie Thérèse

(57) **Abstract**

In access multiplexers (1) comprising network interfaces (22) for interfacing network links (12) with network units (2) and comprising customer interfaces (23) for interfacing customer links (13) with customer units (3) and comprising coupling means (31) for coupling the interfaces (22,23), allocating means (32) are introduced for allocating Medium Access Control addresses to Point to Point Protocol sessions and controlling means (34) are introduced for controlling the routing of packets within the access multiplexer (1) in dependence of the allocations, for reducing complexities. The network links (12) comprise Ethernet connections defined by one or more Virtual Local Area Network tags per service provider. The allocating means (32) comprise relating means (33) for relating combinations of Virtual Local Area Network tags and Medium Access Control addresses and session identifications of Point to Point Protocol sessions, with the allocations comprising relationships. The customer links (13-15) comprise Asynchronous Transfer Mode connections or Ethernet connections.

## Description

The invention relates to an access multiplexer comprising a network interface for interfacing a network link with a network unit and comprising customer interface for interfacing a customer link with a customer unit and comprising means for coupling the network interface and the customer interface.

Examples of such an access multiplexer are digital subscriber line access multiplexers, examples of such a network unit are edge routers, and examples of such a customer unit are customer premises equipment such as routers and modems and personal computers, without excluding other kinds of access multiplexers and other kinds of network units and other kinds of customer units.

A prior art access multiplexer is of common general knowledge. It comprises means such as a cross connect or a bridge for coupling a network interface on the one hand and customer interfaces on the other hand, without excluding other kinds of coupling means. The network interface interfaces a network link coupled to a network unit. A customer interface interfaces a customer link coupled to a customer unit. The network interface couples the network link to the coupling means and vice versa. The customer interface couples the customer link to the coupling means and vice versa.

In case the customer unit is involved in a Point to Point Protocol session and the customer unit is exchanging Internet Protocol packets during this Point to Point Protocol session, and in case the access multiplexer only needs to transparently relay the Point to Point Protocol session, an other network unit will take care of terminating the Point to Point Protocol session.

But in case the customer unit is involved in a Point to Point Protocol session and the customer unit is exchanging Internet Protocol packets during this Point to Point Protocol session, and in case the access multiplexer needs to terminate the Point to Point Protocol session, the access multiplexer needs to perform Internet Protocol routing and Internet Protocol forwarding. This makes the access multiplexer relatively complex. Internet Protocol interfaces need to be configured, Internet Protocol databases need to be configured and need to be maintained, and routing protocols may need to be enabled inside the access multiplexer.

The known access multiplexer is disadvantageous, inter alia, owing to the fact that it is relatively complex.

It is an object of the invention, inter alia, to provide an access multiplexer as defined above that is relatively simple.

The access multiplexer according to the invention is characterized in that the access multiplexer comprises means for allocating a Medium Access Control address to a Point to Point Protocol session and comprises means for controlling the access multiplexer in dependence of an allocation.

The allocating means allocate a first Medium Access Control address to a first Point to Point Protocol session and allocate a second Medium Access Control address different from the first Medium Access Control address to a second Point to Point Protocol session different from the first Point to Point Protocol session. This way, Medium Access Control addresses are used inside the access multiplexer for addressing different Point to Point Protocol sessions. An allocation originating from the allocating means is used by the controlling means, to control (the routing within) the access multiplexer (the coupling means) in dependence of the allocations. This access multiplexer is therefore relatively simple.

The access multiplexer according to the invention terminates the Point to Point Protocol session and might act as a Point to Point Protocol server and might authenticate the Point to Point Protocol session locally or via a Remote Authentication Dial In User Service when required. Compared to the prior art, it is no longer necessary for the access multiplexer to perform Internet Protocol forwarding and/or routing inside the Point to Point Protocol session, which brings complexity as mentioned above. Instead of that, the access multiplexer according to the invention just cross connects Internet Protocol packets.

The access multiplexer according to the invention is further advantageous, inter alia, in that it is more efficient, owing to the fact that fewer configurations and less management need to be performed.

The allocating means for example comprise means for storing Medium Access Control addresses and representations of Point to Point Protocol sessions.

An embodiment of the access multiplexer according to the invention is characterized in that the Medium Access Control address of the Point to Point Protocol session is an internal Medium Access Control address that is a destination address in a downstream direction from the network unit to the access multiplexer and that is a source address in an upstream direction from the access multiplexer to the network unit.

Such internal Medium Access Control addresses replace for example one common Medium Access Control address of an entire access multiplexer. These Medium Access Control addresses are internal Medium Access Control addresses owing to the fact that inside the access multiplexer they are allocated to Point to Point Protocol sessions. These internal Medium Access Control addresses are however also used in external communications between the access multiplexer and the network unit.

An embodiment of the access multiplexer according to the invention is characterized in that the network link comprises an Ethernet connection defined by one or more Virtual Local Area Network tag per service provider.

The Virtual Local Area Network tag selection might be based on a Remote Authentication Dial In User Service authentication of the Point to Point Protocol session or might be based on a local authentication in the access multiplexer.

An embodiment of the access multiplexer according to the invention is characterized in that the allocating means comprise means for relating a combination of a Virtual Local Area Network tag and a Medium Access Control address and a session identification and in that the allocation comprises a relationship originating from the relating means.

The relating means for example comprise means for storing relationships such as a table memory for storing per row in a first column a Virtual Local Area Network tag and in a second column a Medium Access Control address and in a third column a session identification of a Point to Point Protocol session.

An embodiment of the access multiplexer according to the invention is characterized in that the customer link comprises an Asynchronous Transfer Mode connection or an Ethernet connection.

In both cases (Asynchronous Transfer Mode and Ethernet), the access multiplexer according to the invention will be very advantageous.

The invention also relates to means as defined above for use in an access multiplexer as defined above. These means may be the allocating means or the relating means. Such means may be sold and/or produced and/or set up separately from the access multiplexer according to the invention.

The invention also relates to a method for use in an access multiplexer comprising a network interface for interfacing a network link with a network unit and comprising customer interface for interfacing a customer link with a customer unit and comprising means for coupling the network interface and the customer interface.

The method according to the invention is characterized in that the method comprises a first method step of allocating a Medium Access Control address to a Point to Point Protocol session and a second method step of controlling the access multiplexer in dependence of an allocation.

Embodiments of the method according to the invention correspond with the embodiments of the access multiplexer according to the invention.

The invention also relates to a computer program product for performing the method steps of the method as defined above.

The invention also relates to a medium comprising the computer program product as defined above.

The invention is based upon an insight, inter alia, that for example in case the customer unit is involved in a session such as a Point to Point Protocol session and in case the customer unit exchanges Internet Protocol packets during this session, the access multiplexer needs to perform Internet Protocol routing and Internet Protocol forwarding, which makes the access multiplexer relatively complex. The invention is based upon a basic idea, inter alia, that Medium Access Control addresses should be allocated to Point to Point Protocol sessions and the access multiplexer should be controlled in dependence of allocations. This makes the access multiplexer transparent for Internet Protocol forwarding and/or routing.

The invention solves the problem, inter alia, to provide an access multiplexer that is relatively simple. The access multiplexer according to the invention is further advantageous, inter alia, in that it is more efficient, owing to the fact that fewer configurations and less management need to be performed.

These and other aspects of the invention will be apparent from and elucidated with reference to the embodiments(s) described hereinafter.
Fig. 1 shows diagrammatically an access multiplexer according to the invention coupled to a network unit and to three customer units,
Fig. 2 shows diagrammatically an access multiplexer according to the invention coupled to a network unit and to two plus two customer units, and
Fig. 3 shows diagrammatically an access multiplexer according to the invention in greater detail.

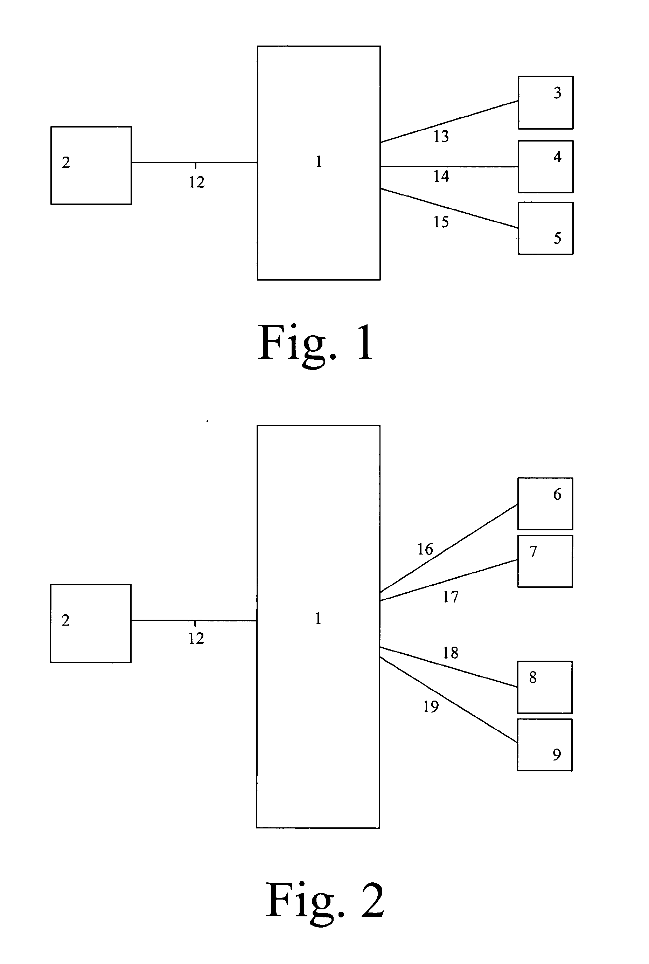

The access multiplexer 1 according to the invention shown in Fig. 1 is coupled via a network link 12 to a network unit 2 and via a first customer link 13 to a first customer unit 3 and via a second customer link 14 to a second customer unit 4 and via a third customer link 15 to a third customer unit 5. The access multiplexer 1 is for example a digital subscriber line access multiplexer, the network unit 2 is for example an edge router, and the customer units 3-5 are for example customer premises equipment such as routers and modems and personal computers. The customer links 13-15 comprise for example Asynchronous Transfer Mode connections.

The access multiplexer 1 according to the invention shown in Fig. 2 is coupled via the network link 12 to the network unit 2 and via customer links 16-19 to customer units 6-9. The customer links 16, 17 comprise for example Asynchronous Transfer Mode connections and the customer links 18, 19 comprise for example Ethernet connections.

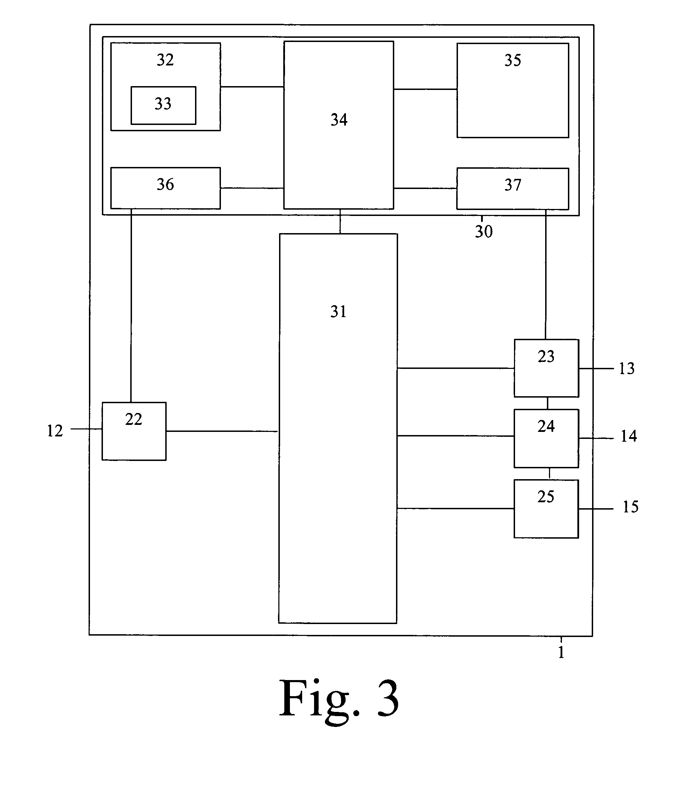

The access multiplexer 1 according to the invention shown in Fig. 3 comprises a network interface 22 for interfacing the network link 12 and comprises a first customer interface 23 for interfacing the first customer link 13 and comprises a second customer interface 24 for interfacing the second customer link 14 and comprises a third customer interface 25 for interfacing the third customer links 15 and comprises means 31 for coupling the network interface 22 on the one hand and the customer interfaces 23-25 on the other hand and comprises means 30 for controlling the access multiplexer 1. The controlling means 30 comprise means 32 for allocating Medium Access Control addresses to Point to Point Protocol sessions performed via the customer links 13-15 and the customer interfaces 23-25. The controlling means 30 control the access multiplexer 1 in dependence of allocations originating from the allocating means 32 and comprise monitoring means 36, 37 for monitoring the interfaces 22 and 23-25 for example for reporting incoming and/or outgoing traffic and comprise means 35 for storing control information. The allocating means 32 preferably comprise means 33 for relating a combination of a Virtual Local Area Network tag and a Medium Access Control address and a session identification of a Point to Point Protocol session, with the allocation comprising a relationship originating from the relating means 33. The means 32-37 are coupled to a processor 34. The coupling means 31 for example comprise a cross connect. The monitoring means 36, 37 might further be used for interfacing the interfaces 22-25 and the processor 34 for controlling buffer functions and/or encapsulation functions and/or decapsulation functions and/or address insertion functions and/or address replacement functions and/or address deletion functions etc. of the interfaces 22-25.

In a prior art situation, the allocating means 32 are not present, and the access multiplexer 1 is based on Internet Protocol forwarding and Internet Protocol routing, which makes the access multiplexer relatively complex. For example in case a customer unit 3 is involved in a Point to Point Protocol session and Internet Protocol packets are exchanged via the customer link 13 during this session, the access multiplexer 1 needs to configure Internet Protocol interfaces and needs to configure and maintain Internet Protocol databases, and routing protocols may need to be enabled inside the access multiplexer 1.

More particularly, in a distributed subscriber management model for Point to Point Protocol over Ethernet PPPoE and Point to Point Protocol over Asynchronous Transfer Mode PPPoA users, the Digital Subscriber Line Access Multiplexer DSLAM terminates the user Point to Point Protocol PPP session. The user is authenticated locally or via a Remote Authentication Dial In User Service RADIUS (a server for remote user authentication and accounting), the user session is attached to an IP forwarding instance (determined during the authentication phase), IP packets are extracted from the PPP, IP packets are IP forwarded within the context of the forwarding instance, IP packets are encapsulated in the Ethernet and bridged over the network interface determined as a result of IP forwarding. The DSLAM functionality is extended with IP forwarding and routing which makes DSLAM management and configuration more complex. The IP interfaces have to be configured in the DSLAM, the IP forwarding database has to be configured and maintained the by DSLAM, routing protocols may have to be enabled in the DSLAM for redundancy.

According to the invention, a relatively simple access multiplexer 1 is created by introducing the allocating means 32 for allocating a Medium Access Control address to a Point to Point Protocol session, and by letting the controlling means 30 control the access multiplexer 1 in dependence of an allocation.

The allocating means 32 allocate a first Medium Access Control address to a first Point to Point Protocol session and allocate a second Medium Access Control address different from the first Medium Access Control address to a second Point to Point Protocol session different from the first Point to Point Protocol session. This way, Medium Access Control addresses are used inside the access multiplexer 1 for addressing different Point to Point Protocol sessions. An allocation originating from the allocating means 32 is used by the controlling means 30, to control (the routing within) the access multiplexer 1 in dependence of the allocation. This access multiplexer 1 is therefore relatively simple.

The allocating means 32 for example comprise means for storing Medium Access Control addresses and representations of the Point to Point Protocol sessions.

Preferably, the Medium Access Control address of the Point to Point Protocol session is an internal Medium Access Control address that is a destination address in a downstream direction from the network unit 2 to the access multiplexer 1 and that is a source address in an upstream direction from the access multiplexer 1 to the network unit 2 as further explained in greater detail below.

Such internal Medium Access Control addresses replace for example one common Medium Access Control address of an entire access multiplexer 1. These Medium Access Control addresses are internal Medium Access Control addresses owing to the fact that inside the access multiplexer 1 they are allocated to Point to Point Protocol sessions. These internal Medium Access Control addresses are however also used in external communications between the access multiplexer 1 and the network unit 2.

Preferably, the network link 12 comprises an Ethernet connection defined by one or more Virtual Local Area Network tag per service provider, and/or the allocating means 32 comprise the relating means 33 for relating a combination of a Virtual Local Area Network tag and a Medium Access Control address and a session identification of a Point to Point Protocol session, with the allocation comprising a relationship originating from the relating means 33. The relating means 33 for example comprise means for storing relationships such as a table memory for storing per row in a first column a Virtual Local Area Network tag and in a second column a Medium Access Control address and in a third column a session identification of a Point to Point Protocol session.

More particularly, the present invention for example introduces in the DSLAM a cross connect where the DSLAM deals with the translation of the Virtual Local Area Network VLAN tag together with an internally assigned Medium Access Control MAC address into a session identification in order to identify a Point to Point Protocol PPP session uniquely. This translation is done using a database containing the relations between the VLAN identifying a service provider, a - to each user-session internally assigned - MAC address and the corresponding session identification.

In case of ATM user interfaces (PPP over ATM = PPPoA), there can only be one PPP session on the user interface, and the user session can be identified by the user interface only. In case of Ethernet user interfaces (PPP over Ethernet over ATM = PPPoEoA, or pure PPP over Ethernet = PPPoE), it is possible that more than one PPP session is established on the same user interface. In that case, the user interface plus the PPPoE session-id (and/or the user MAC) can uniquely identify a PPP session, whereby in the downstream destination the MAC (internal MAC) should be replaced by the user MAC.

As a result of an authentication the network service provider is selected. For each service provider edge router one or more VLANs (service provider VLANs) are configured in the DSLAM (a Point to Point Protocol session + VLAN association is determined during a session authentication which is to be performed locally or via a RADIUS server). Hence based on the selection of the service provider (to be determined locally or via a RADIUS server during a session authentication), the corresponding VLAN is chosen. User IP packets are extracted from the PPP, encapsulated into Ethernet and sent over the network interface within the service provider VLAN. One internal MAC address is allocated per user PPP session to distinguish each user session attached to the same service provider VLAN. The DSLAM needs to resolve the MAC address of the edge router per service provider VLAN. Either the MAC address or the IP address of the edge router is also determined together with the service provider VLAN. The DSLAM uses for example an Address Resolution Protocol ARP to resolve the MAC address when only an IP address is known.

For example one service provider VLAN is configured in the DSLAM per service provider IP network edge router, the DSLAM terminates a PPP session, authenticates the user locally or via a RADIUS (a server for remote user authentication and accounting), as a result of an authentication, the service provider VLAN is determined. One internal MAC is allocated per user PPP session to identify each user session (connected to the same service provider) uniquely.

The upstream forwarding of an IP packet received from a PPPoA user session goes as follows:
For unicast IP packets:
   - the IP packet is extracted from PPPoA and encapsulated into Ethernet (IPoE).
   - the VLAN is set to the VLAN determined during the authentication.
   - the source MAC is set to the internal MAC allocated for the user PPP session.
   - the destination MAC is set to the MAC of the edge router (either configured in DSLAM or learnt via the ARP).
For broadcast IP packets:
   - the IP packet is extracted from PPPoA and encapsulated into Ethernet (IPoE).
   - the VLAN is set to the VLAN determined during the authentication.
   - the source MAC is set to the internal MAC allocated for the user PPP session.
   - the destination MAC is set to the broadcast MAC.
For multicast IP packets:
   - the IP packet is extracted from PPPoA and encapsulated into Ethernet (IPoE).
   - the VLAN is set to the VLAN associated with a Customer Premises Equipment CPE subnet.
   - the source MAC is set to the internal MAC allocated for the user PPP session.
   - the destination MAC is set to the multicast MAC (derived from the multicast destination IP address).

The downstream forwarding of an IP packet received from an IPoE network interface to a PPPoA user session goes as follows:
For unicast IP packets:
   - the VLAN is the service provider VLAN.
   - the destination MAC is the internal MAC allocated for the user PPP session.
   - the user PPPoA session is selected based on VLAN + destination MAC combination.
   - the IP packet is encapsulated into PPPoA and sent over the user interface.
For broadcast IP packets:
   - the VLAN is the service provider VLAN.
   - the destination MAC is the broadcast MAC.
   - one copy of the IP packet is sent on each user PPPoA session associated with the VLAN.
For a broadcast ARP request:
   - the VLAN is the service provider VLAN.
   - the target IP address (in the ARP message) is compared with the IP addresses of the user PPPoA sessions associated with the VLAN.
   - if there is a match, then the DSLAM sends an ARP reply where the source MAC is set to the internal MAC address of the user PPPoA session of which IP address matches the target IP address in the ARP request.
   - this requires the DSLAM to for example keep track of the user IP addresses which are allocated during the authentication phase.
For multicast IP packets:
   - the VLAN is the service provider VLAN.
   - the destination MAC is the multicast MAC.
   - one copy of the IP packet is sent on each user PPPoA session associated with the VLAN.
   - optionally, Internet Group Management Protocol IGMP snooping can be enabled in DSLAM. In this case, multicast IP packets are sent according to the multicast tree established dynamically by snooping IGMP messages.

An upstream forwarding of an IP packet received from a PPPoE user session goes as follows:
For unicast IP packets:
   - the IP packet is extracted from PPPoE and encapsulated into Ethernet (IPoE).
   - the VLAN is set to the VLAN determined during the authentication.
   - the source MAC is set to the internal MAC allocated for the user PPP session.
   - the destination MAC is set to the MAC of the edge router (either configured in the DSLAM or learnt via an ARP).
For broadcast IP packets:
   - the IP packet is extracted from PPPoE and encapsulated into Ethernet (IPoE).
   - the VLAN is set to the VLAN determined during the authentication.
   - the source MAC is set to the internal MAC allocated for the user PPP session.
   - the destination MAC is set to the broadcast MAC.
For multicast IP packets:
   - the IP packet is extracted from PPPoE and encapsulated into Ethernet (IPoE).
   - the VLAN is set to the VLAN determined during the authentication of the user session
   - the source MAC is set to the internal MAC allocated for the user PPP session.
   - the destination MAC is set to the multicast MAC (derived from the multicast destination IP address).

The downstream forwarding of an IP packet received from an IPoE edge router interface to a PPPoE user session goes as follows:
For unicast IP packets:
   - the VLAN is the service provider VLAN.
   - the destination MAC is the internal MAC allocated for the user PPP session.
   - the user PPPoE session is selected based on VLAN + Destination MAC combination.
   - the IP packet is encapsulated into PPPoE and sent over the user interface (in this case the destination MAC is the user MAC which has been stored in a session table of the access multiplexer).
For broadcast IP packets:
   - the VLAN is the service provider VLAN.
   - the destination MAC is the broadcast MAC.
   - one copy of the IP packet is sent on each user PPPoE session associated with the VLAN.
For a broadcast ARP request:
   - the VLAN is the service provider VLAN.
   - the target IP address (in the ARP message) is compared with the IP addresses of the user PPPoE sessions associated with the VLAN.
   - if there is a match, then the DSLAM sends an ARP reply where the source MAC is set to the internal MAC address of the user PPPoE session of which IP address matches the target IP address in the ARP request.
   - this requires the DSLAM to for example keep track of the user IP addresses which are allocated during the authentication phase.

For multicast IP packets
- the VLAN is the service provider VLAN.
- the destination MAC is the multicast MAC.
- one copy of the IP packet is sent on each user PPPoE session associated with the VLAN.
- optionally, IGMP snooping can be enabled in the DSLAM. In this case, multicast IP packets are sent according to the multicast tree established dynamically by snooping IGMP messages.
In case a CPE interface encapsulation type cannot be known in advance, auto-detection of the encapsulation type can be enabled in the DSLAM. In this case, the DSLAM detects the encapsulation type based on the frame sent by the CPE and adapts the cross connect behavior accordingly. The MAC address or the IP address of the edge router can be configured locally (when local authentication is enabled) or can be returned by a RADIUS server (when RADIUS authentication is enabled).

This all results in advantages such as in the distributed subscriber management model, there is no need to configure and enable IP forwarding in DSLAMs, and less configuration and management in DSLAMs.

In Fig. 1-3, each coupling / connection may be a wired coupling / connection or a wireless coupling / connection. Any block shown may be divided into sub- block, and any two or more block may be integrated into a new and larger block. Any block shown may comprise hardware and/or software. The computer program product according to the invention may be stored on and/or comprise a fixed medium such as the storing means 35 or a removable medium not shown.

The expression "for" in for example "for interfacing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude a possible presence of one or more pluralities.
The steps and/or functions of allocating and controlling do not exclude further steps and/or functions, like for example, inter alia, the steps and/or functions described for the Figures etc.

## Claims

1. Access multiplexer (1) comprising a network interface (22) for interfacing a network link (12) with a network unit (2) and comprising customer interface (23) for interfacing a customer link (13) with a customer unit (3) and comprising means (31) for coupling the network interface (22) and the customer interface (23), **characterized in that** the access multiplexer (1) comprises means (32) for allocating a Medium Access Control address to a Point to Point Protocol session and comprises means (30) for controlling the access multiplexer (1) in dependence of an allocation.

2. Access multiplexer (1) as defined in claim 1, **characterized in that** the Medium Access Control address of the Point to Point Protocol session is an internal Medium Access Control address that is a destination address in a downstream direction from the network unit (2) to the access multiplexer (1) and that is a source address in an upstream direction from the access multiplexer (1) to the network unit (2).

3. Access multiplexer (1) as defined in claim 2, **characterized in that** the network link (12) comprises an Ethernet connection defined by one or more Virtual Local Area Network tag per service provider.

4. Access multiplexer (1) as defined in claim 3, **characterized in that** the allocating means (32) comprise means (33) for relating a combination of a Virtual Local Area Network tag and a Medium Access Control address to a session identification and **in that** the allocation comprises a relationship originating from the relating means (33).

5. Access multiplexer (1) as defined in claim 4, **characterized in that** the customer link (13, 14) comprises an Asynchronous Transfer Mode connection or an Ethernet connection.

6. Means (32, 33) as defined in any one of the claims 1-5 for use in an access multiplexer (1).

7. Method for use in an access multiplexer (1) comprising a network interface (22) for interfacing a network link (12) with a network unit (2) and comprising customer interface (23) for interfacing a customer link (13) with a customer unit (3) and comprising means (31) for coupling the network interface (22) and the customer interface (23), **characterized in that** the method comprises a first method step of allocating a Medium Access Control address to a Point to Point Protocol session and a second method step of controlling the access multiplexer (1) in dependence of an allocation.

8. Computer program product for performing the method steps of the method as defined in claim 7.

9. Medium comprising the computer program product as defined in claim 8.
